# EUROPEAN PATENT SPECIFICATION

(11) **EP 3 487 958 B1**
(45) Date of publication and mention of the grant of the patent: **03.11.2021**
(21) Application number: 17830521.5
(22) Date of filing: 21.07.2017
(51) Int. Cl.: C10B 53/07, C10B 47/44, C10G 1/10, C10B 47/26

(54) **PYROLYSIS SYSTEM AND PROCESS**
PYROLYSESYSTEM UND -VERFAHREN
SYSTÈME ET PROCÉDÉ DE PYROLYSE

(30) Priority: 21.07.2016 DK 201670548
(43) Date of publication of application: 29.05.2019
(73) Proprietor: Green Energy Circle ApS, 2970 Hørsholm (DK)
(72) Inventor: BOYSEN, Lars, 2980 Kokkedal (DK)
(74) Representative: Nordic Patent Service A/S
(86) International application number: PCT/DK2017/050247
(87) International publication number: WO 2018/014922

(56) References cited:
- WO-A1-2009/130524
- WO-A1-2013/095145
- US-A- 4 229 185
- US-A- 4 250 158
- US-A- 4 647 443
- US-A- 4 740 270
- US-A- 5 411 714
- US-A1- 2002 117 388
- US-A1- 2011 247 927
- US-A1- 2013 064 754
- US-A1- 2015 275 093

## Description

### TECHNICAL FIELD

The present disclosure relates generally to the recovery of usable products from pyrolysis of material containing hydrocarbons. More particularly, the present disclosure relates to a system and process, which may be suitable for pyrolysis of used tires or roofing pelt.

### BACKGROUND

For many years it has been known that used vehicle tires can be recycled by pyrolysis to obtain valuable by-products that can be sold and reused. Pyrolysis, generally speaking, is a thermal distillation or decomposition of a substance. In the case of used vehicle tires, this process is carried out in the absence of oxygen and at temperatures generally between 500° C. and 800° C.

The process of recycling used tires by pyrolysis allows the recovery of substantial amounts of oil, gas, carbon black and scrap steel. One drawback to many known pyrolysis machines involves oil contamination in the carbon black which destroys the commercial value thereof. In order to produce high quality carbon black, virtually all oil must be removed. Thus, the oil vapor released from the pyrolyzed material should be removed with a minimum of contact to the carbon black.

U.S. Pat. No. 6,221,329 discloses a pyrolysis system for the recovery of desirable constituent materials from vehicle tire pieces through pyrolysis. The system includes a horizontally arranged pyrolysis section that is divided into a plurality of individual heating zones. Each of the heating zones is heated to a distinct operating temperature that is independent from the operating temperature of the remaining heating zones. Vehicle tire pieces are fed into the infeed end of the pyrolysis section by a rotatable feed cylinder that includes a screw-like flight extending from the inner wall of the feed cylinder. As the feed cylinder rotates, the flight directs the supply of vehicle tire pieces into the infeed end of the pyrolysis section. The pyrolysis section includes a rotary kiln that is divided into the plurality of heating zones. The vehicle tire pieces are fed through the plurality of heating zones in the rotary kiln from the infeed end of the rotary kiln to the discharge end of the rotary kiln, such that the tire pieces are pyrolyzed as they traverse the rotary kiln. A rotatable trommel is coupled to the discharge end of the rotary kiln to separate the pyrolyzed tire pieces into their constituent desirable materials. A gas discharge pipe extends into an upper part of the interior of the rotary kiln to remove the oil-containing gasses at a position spaced from the discharged end of the rotary kiln to prevent contamination of the carbon black.

U.S. Pat. No. 7,329,329 discloses another pyrolysis system and process, which include feeding tire shreds to a horizontally arranged pyrolysis reactor. The disclosed pyrolysis reactor is a continuous pyrolysis reactor equipped with a continuous rotating feed mechanism for allowing tire shreds to move through the inside of the reactor. A rotary screw or auger is arranged to distribute and convey tire shreds through the pyrolysis reactor. The carbon-containing solid is removed from the reactor, and the hydrocarbon-containing gas stream is directed into a separator in which the hydrocarbon-containing gas stream is contacted with an oil spray for washing particulate from the hydrocarbon-containing gas stream and a portion of the gas stream is condensed to oil.

Both systems disclosed in U.S. Pat. No. 6,221,329 and in U.S. Pat. No. 7,329,329 have a horizontally arranged pyrolysis reactor, allowing the produced gasses to be removed from the reactor at a position spaced from the discharge of the carbon containing solids.

U.S. Pat. No. 7,101,463 discloses a pyrolysis system and process for the recovery of oil from material containing hydrocarbons such as shredded vehicle tires. The system utilizes a pair of sequentially positioned packed towers to recover at least 95% of the oil contained in the pyrolysis gases. The first packed tower operates above the dew point of the water vapor in the pyrolysis gases to insure that no water is condensed and obtain a primary oil fraction having oil with a high flash point of about 60° C. or greater and a primary vapor fraction containing additional oils, fuel gases and water vapor. The primary vapor fraction is fed to the second packed tower which operates below the dew point of the water vapor to condense the water and oil having a low flash point of 34° C. or below, and provide a secondary vapor fraction containing valuable fuel gases.

U.S. Pat. Appl. No. 2015/0275093 discloses an apparatus for refining oil from tire, the apparatus includes a box body, an upper transmission channel, an upper transmission device, a lower transmission channel, a lower transmission device, a molten salt storage container, and a heat-conduction oil storage container, where the upper transmission channel is located above the lower transmission channel. According to a disclosed embodiment, the upper and lower transmission channels are cylindrical shaped and horizontal arranged pyrolysis reactors, with the upper and lower transmission devices being screw-type augers for transferring solid fuel pieces within the respective transmission channel. The upper and lower reactors are placed within a closed box body, and each reactor has a gas outlet port from which gas generated by pyrolysis passes from the reactor into the box body. The box body has an oil-gas outlet feeding a condensing gas container or two series coupled condensing gas containers, each condensing gas container having a condensing gas container inlet, an uncondensed gas outlet, and a refining oil outlet. The gas generated in the upper and first reactor is mixed with the gas generated within the lower and second reactor within the box body, with the mixed gases being feed into the same condensing gas container.

In order to produce high quality commercial carbon black from solid fuel, such as tire shreds or roofing pelt or plastic, one has to control the temperature of the pyrolysis process. Thus, there is a continuing need for an improved solid fuel pyrolysis system and process, which provides an improved control of the temperature of the pyrolysis process.

### SUMMARY

It is an object of the invention to provide a pyrolysis system and process, which allows an improved control of the process temperature when pyrolyzing a solid fuel, such as tire shreds or roofing pelt or plastic.

This object is achieved with the apparatus of claim 1 and the process of claim 9.

The foregoing and other objects are achieved by the features of the independent claims. Further implementation forms are apparent from the dependent claims, the description and the figures. These and other aspects of the invention will be apparent from the embodiments described below.

### BRIEF DESCRIPTION OF THE DRAWINGS

In the following detailed portion of the present disclosure, the invention will be explained in more detail with reference to the example embodiments shown in the drawings, in which:
Fig. 1 is a block diagram giving a schematic representation of a system and process for pyrolyzing tires according to an exemplary embodiment;
Fig. 2 is a cross sectional representation of a pyrolysis reactor system according to an exemplary embodiment;
Fig. 3 is a schematic representation of a solid fuel feeding system according to an exemplary embodiment; and
Fig. 4 is a schematic representation of an oil condensing system according to an exemplary embodiment.

### DETAILED DESCRIPTION

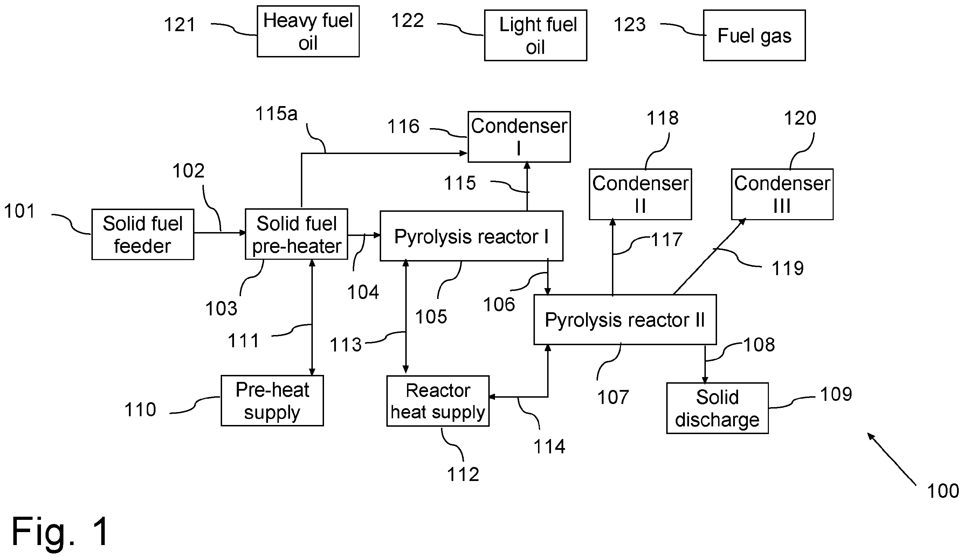

Fig. 1 is a block diagram giving a presentation of a solid fuel pyrolysis process and system, which can be used for pyrolyzing of tire shreds. The system, generally identified as 100, comprises several general sections, including a solid fuel feeding system, a pyrolysis reactor system, an oil condensing system, and a solids handling system.

The solid fuel, which preferably is or comprises pieces of tire shreds, but which may also be or comprise pieces of roofing felt, is fed by a solid fuel feeder 101, from where the fuel is fed 102 to a solid fuel pre-heater 103. The tire shred may have dimensions in the range of 5 cm in the longest dimension. However, it will be understood that such tire pieces will not be uniform in size. In the pre-heater 103, the solid fuel/tire shreds are heated to a temperature between 160-200°C, such as about 180°C before being fed 104 into a first pyrolysis reactor 105. A pre-heating system 110 provides heating medium for heating the solid fuel pre-heater 103 via heating medium supplies 111.

In the first reactor 105 the solid fuel pieces/tire shreds are pyrolyzed to produce a first gas stream, which comprises hydrocarbon, and first solid pieces comprising carbon. During the pyrolyzing process in the first reactor 105, the solid pieces are transported from an infeed end to a discharge end, and during this transportation the solid pieces are heated to increase the temperature from the pre-heated infeed temperature or first inlet temperature of 160-200°C, such as about 180°C, to a first outlet temperature in the range of 320-380°C, such as about 350°C. A reactor heat supply system 112 provides a heating medium for heating the first reactor 104 via heating medium supplies 113. From the discharge end of the first pyrolysis reactor 105, the first solid pieces are transferred 106 into an infeed end of a second pyrolysis reactor 107 to be further pyrolyzed. In the second reactor 107 the solid pieces are pyrolyzed to produce a second gas stream and a third gas stream, which both comprises hydrocarbon, and second solid pieces comprising carbon. During the pyrolyzing process in the second reactor 107, the solid pieces are transported from an infeed end to a discharge end, and during this transportation the solid pieces are heated to increase the temperature from the first outlet temperature or second inlet temperature of 320-380°C, such as about 350°C, to a second outlet temperature in the range of 420-480°C, such as about 450°C. The reactor heat supply system 112 also provides a heating medium for heating the second reactor 107 via heating medium supplies 114. From the discharge end of the second pyrolysis reactor 107, the second solid pieces are transferred 108 into a solid discharge system 109. From the discharge system 109, the second solid carbon comprising pieces can be further processed by conventional techniques to produce a high quality commercial grade carbon black, which can be used for known functions.

It is noted that by having two separate pyrolysis reactors 105, 107, the temperature of the material being pyrolyzed can be controlled to a much higher degree than for existing systems using only one pyrolysis reactor, allowing an end product comprising high a very high quality carbon black.

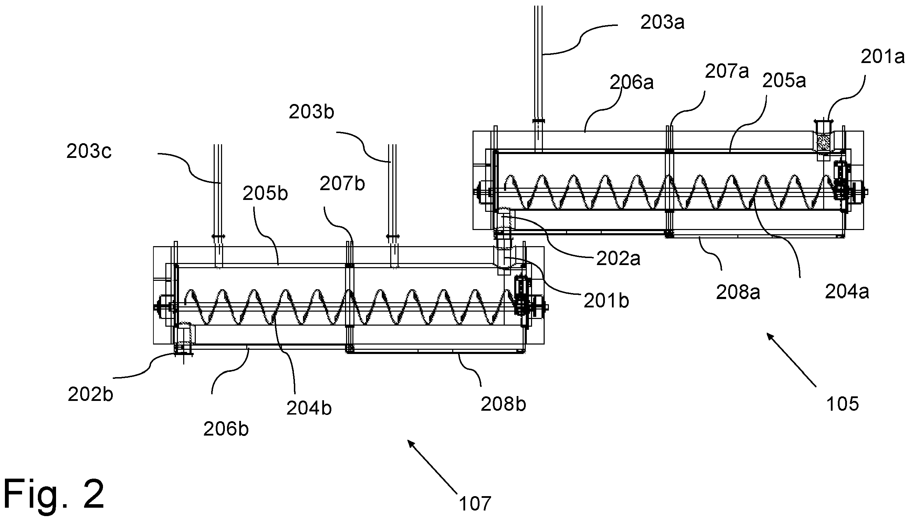

The arrangement of the first and second pyrolysis reactors 105, 107 is further illustrated in Fig. 2, which is a cross sectional representation of a pyrolysis reactor system according to an exemplary embodiment. Both reactors 105, 107 has an infeed end with a solid fuel inlet 201a, 201b and a discharge end with a solid removal outlet 202a, 202b. Both reactors 105, 107 are arranged horizontally with the solid removal outlet 202a of the first reactor 105 arranged above the solid fuel inlet 201b of the second reactor 107. Thus, the solid fuel inlet 201b of the second reactor 107 is in communication with the solid removal outlet 202a of the first reactor 105 for transfer of processed solid fuel from the first reactor 105 to the second reactor 107.

During the pyrolysis processes in the first and second reactor, several gas streams are produced. Thus, one or more gas removal outlets 203a, 203b, 203c are provided in each reactor 105, 107 in order to remove the produced hydrocarbon comprising gases. For the exemplary embodiment of Figs. 1 and 2, the first reactor 105 has one gas removal outlet, a first gas removal outlet 203a, and the second reactor 107 has two gas removal outlets, a second gas removal outlet 203b and a third gas removal outlet 203c. For the first reactor 105, the first gas removal outlet 203a is arranged closer to the discharge end than to the infeed end, and preferably closer to the discharge end than to the middle of the reactor 105. For the second reactor 107, the second gas removal outlet 203b is arranged closer to the infeed end than to the discharge end, and preferably closer to the middle than to the infeed end of the reactor 107, and the third gas removal outlet 203c is arranged closer to the discharge end than to the infeed end, and preferably closer to the discharge end than to the middle of the reactor 107.

The temperature of the solid particles being transported through the reactors 105 and 107 increases from the infeed end of the first reactor 105 to the discharge end of the second reactor 107, and by having several spaced gas removal outlets 203a, 203b, 203c arranged along the combined reactors 105, 107, the hydrocarbon content of the gas streams being outlet through the outlets 203a, 203b, 203c, will vary from one outlet to another.

In order to recover oil from the hydrocarbon containing gases resulting from the pyrolysis processes of the first and second reactors 105, 107, each of the gas removal outlets 203a, 203b, 203c are feeding an oil condensing system. This is illustrated in Fig. 1, in which the produced first gas stream of the first reactor 105 is directed 115 to a first oil condensing system 116 via the first gas removal outlet 203a, and the second gas stream produced in the second reactor 107 is directed 117 into a second oil condensing system 118 via the second gas removal outlet 203b, while the third gas stream is directed 119 into a third oil condensing system 120 via the third gas removal outlet 203c.

Since the hydrocarbon content varies for the three gas streams being directed through the outlets 203a, 203b, 203c, different kind of oils may be obtained from each of the three oil condensing systems 116, 118, 120.

It is also within an embodiment of the disclosure that the solid fuel pre-heater 103 has a gas removal outlet 115a arranged for directing a pre-heating gas stream, which is produced during pre-heating of the solid fuel, into an oil condensing system, which in an embodiment may be the first oil condensing system 116.

Each oil condensing system 116, 118, 120 may be configured to perform fractional distillation of the received gas stream, with the outcome being different types of oils, including heavy fuel oil 121 and light fuel oil 122, and fuel gases 123.

The pyrolysis reactors 105, 107 may be continuous or batch pyrolysis reactors, preferably, the pyrolysis reactors 105, 107 are continuous type pyrolysis reactors. In the exemplary embodiment shown in Fig. 2, the pyrolysis reactors 105, 107 are both equipped with a continuous rotating feed mechanism for allowing solid pieces/tire shreds to move through the inside of the reactors 105, 107. Preferably, both the first and second reactors 105, 107 comprises a rotary screw, such as an auger, 204a, 204b, which is configured for transferring the solid fuel pieces/tire shreds from the solid fuel inlet 201a, 201b to the solid removal outlet 201a, 202b.

The pyrolysis process is an anaerobic process, and any inlets and outlets to the pyrolysis reactors 105, 107 must be as airtight as possible, such that the reactors 105, 107 are substantially, and preferably completely, anaerobic in operation. Thus, air isolation gates or chambers (not shown in Fig. 2) are arranged at the solid fuel inlet 201a at the infeed end of the first reactor 105, between the solid removal outlet 202a at the discharge end of the first reactor 105 and the solid fuel inlet 201b at the infeed end of the second reactor 107, and at the solid removal outlet 202b at the discharge end of the second reactor 107. The isolation gates or chambers should be configured for preventing air to enter into the first and second pyrolysis reactors 105, 107. The air isolation gates or airlocks may be any suitable airlocks commercially available.

Each of the pyrolysis reactors 105, 107 has an inner reactor shell 205a, 205b, in which the solid fuel is processed, and for each reactor 105, 107 the solid fuel inlet 201a, 201b at the infeed end reaches into the inner reactor shell 205a, 205b, and the solid removal outlet 202a, 202b at the discharge end reaches into the inner reactor shell 205a, 205b.

In order to receive a heating medium for heating of the reactors 105, 107, each of the pyrolysis reactors 105, 107 has an outer shell or jacket 206a, 206b surrounding the part of the inner reactor shell 205a, 205b, in which the solid fuel is pyrolysed, and the outer shell or jacket 206a, 206b holds in- and outlets 207a, 207b and 208a, 208b for transfer of a heating medium to and from the outer shell or jacket 206a, 206b. The heating medium is provided by the reactor heat supply system 112. In an exemplary embodiment, the heating medium is molten salt, and the heat supply system comprises a boiler system for heating the molten salt and for circulating the molten salt to and from the pyrolysis reactors 105, 107. The molten salt may be heated to a temperature of about 530°C in the boiler system before being circulated to the pyrolysis reactors 105, 107. By using molten salt as a heating medium, the problem of having water introduced into the hydrocarbon containing gases during the pyrolysis process is reduced.

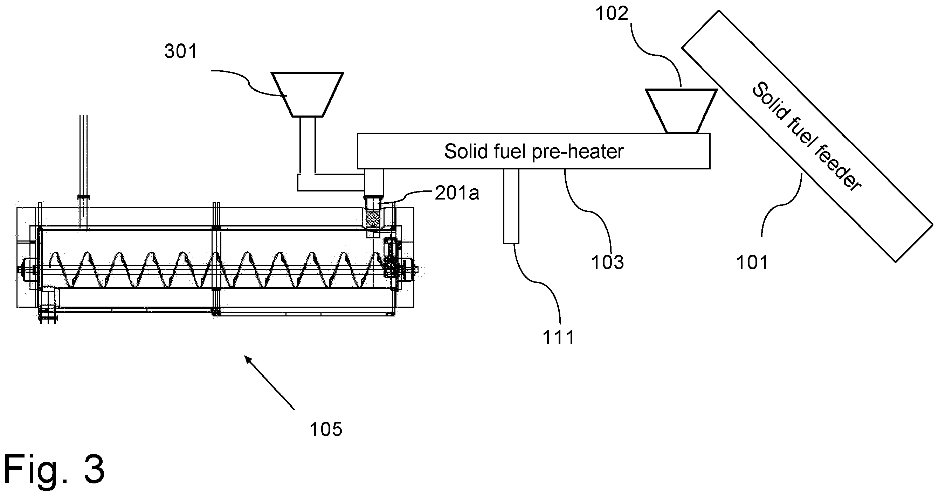

The pre-heating and feeding of the solid fuel pieces/tire shreds into the first pyrolysis reactor 105 is further illustrated in Fig. 3. The solid fuel pieces/tire shreds are put into the solid fuel feeder 101, which may be a conveyor belt type feeder, from where the fuel pieces are fed 102 into the solid fuel pre-heater 103. The pre-heater comprises an enclosed screw or auger, which is configured for transferring the solid fuel pieces into the solid fuel inlet 201a of the first reactor 105. The enclosure covering the last half of the screw being closest to the first reactor 105, holds a jacket for receiving a heating medium, thereby defining a pre-heating zone. The pre-heating zone may be configured to be heated by a heating medium, which may be a mixture of hot water and molten salt. The molten salt may be provided via heating medium supplies 111 from the boiler system of the reactor heat supply 112. The molten salt is mixed with water, such as about half of molten salt and half of hot water, whereby the temperature of the molten salt is lowered. The temperature of the heating medium may be controlled in order to obtain an output temperature of the pre-heating zone to be about 180°C.

It is within an embodiment that the solid fuel pre-heater 103 or the solid fuel inlet 201a of the first reactor 105 holds a feed lock 301, which should be an airtight feed lock 301. The feed lock may be arranged at the solid fuel inlet 201a or in communication with the solid fuel inlet 201a, and the feed lock 301 may be used for feeding a catalyst or catalysts into the pyrolysis reactor 105. The catalyst material may be a metal and/or chalk. The feed lock 301 may also be used for feeding products or material, which are to be pyrolysed together with the pre-heated solid fuel, but which are not to be pre-heated, into the pyrolysis reactor 105. Such products can be plastic products, which can serve to soften the solid fuel pieces when being pyrolysed. A conveyer belt type feeder (not shown in Fig. 3) may be provided for feeding products into the feed lock 301.

The solid fuel pre-heater 103 is configured in order to obtain an airtight feeding into the first reactor 105. Thus, air isolation gates or chambers are arranged at the inlet end of the pre-heater 103 and, as mentioned above, at the solid fuel inlet 201a of the first reactor 105.

The oil condensing systems 116, 118, 120 used for recovering oil from the obtained gas streams may be any conventional oil condensing system used in known solid fuel pyrolysis processes. According to an exemplary embodiment, each or part of the oil condensing systems 116, 118, 120 comprises a primary oil condensing system and a secondary oil condensing system, where the primary oil condensing system holds a gas inlet in communication with a reactor gas removal outlet 203a, 203b, or 203c, and further holds one or more gas outlets feeding one or more gas inlets of the secondary oil condensing system. Here, the primary oil condensing system is configured for operating at a first oil condensing temperature being higher than one or more second oil condensing temperatures of the secondary oil condensing system.

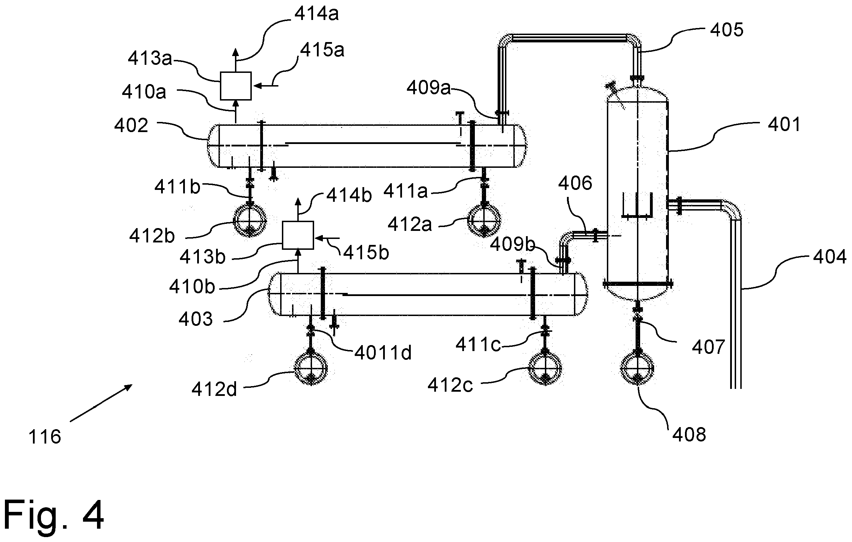

An exemplary embodiment of a preferred oil condensing system 116 to be used in the system of the present disclosure is illustrated in Fig. 4. The oil condensing system 116 of Fig. 4 holds a primary oil condensing system comprising a vertical condenser 401 and a secondary oil condensing system comprising a first 402 and a second 403 horizontal condenser. The vertical condenser 401 holds a gas inlet 404 of the condensing system, a first gas outlet 405 feeding a gas inlet 409a of the first horizontal condenser 402, a second gas outlet 406 feeding a gas inlet 409b of the second horizontal condenser 403, and an oil outlet 407 feeding condensed oil into an oil tank or heavy fuel oil tank 408. The vertical condenser 401 has an upper end, a lower end, a first intermediate portion above the lower end, and a second intermediate portion below the upper portion and above the first intermediate portion. The gas inlet 404 is disposed at the second intermediate portion, while the first gas outlet 405 is disposed at the upper end, the second gas outlet 406 is disposed at the first intermediate portion, and the oil outlet 407 is disposed at the lower end.

Each of the horizontal condensers 402, 403 has an inlet end holding the gas inlet 409a, 409b, an outlet end holding a gas outlet 410a, 410b, and a bottom part holding two oil outlets 411a, 411a and 411c, 411d feeding condensed oil into corresponding oil tank or light fuel oil tanks 412a, 412b and 412c, 412d.

Referring now to Fig. 2, the gases removed by a gas removal outlets 203a, 203b or 203c are then subject to downstream processing via oil condensing systems 116, 118, 120 similar to the system 116 as illustrated in Fig. 4. The gas removal outlet 203 feeds the hot gases into the vertical primary oil condenser 401. The incoming hot pyrolysis gases, which differs in temperature for each of the outlets 203a, 203b, 203c are fed into the second intermediate portion of condenser 401 via the gas inlet 401, and enter the condenser 401 at a temperature within the range of about 300 to 450° C, rise through the condenser 401, are cooled with part of the gases being condensed, and with the non-condensed gases exiting through the first and second gas outlets 405 and 406, where the lightest of the non-condensed gases are exited through the first gas outlet 405 at the upper end of the condenser 401, while the heavier non-condensed gases are exited through the second gas outlet 406 at the first intermediate portion below the gas inlet 404. Condensed oil is collected at the bottom of the condenser 401 and fed via the oil outlet 407 into the heavy fuel oil tank 408.

The vertical condenser 401 separates the incoming pyrolysis gases into a primary oil fraction containing condensed oil and particulate matter, and two primary vapor fractions containing oil, hydrocarbon fuel gases and water vapor. By controlling the temperature and flow rate of the cooling medium of the condenser 401, the temperature of the gases leaving the condenser 401 can be controlled. Preferably, it is desirable to control this temperature to be above the dew point of the water vapor in the gas stream. Thus, a temperature of about 100 to 105° C is preferred to insure no water is condensed in condenser 401. By preventing the condensation of water in the first condenser 401, an undesirable oil/water mixture is not obtained in the material collected in tank 408. Since the condenser 401 is operating at a temperature above the dew point of water vapor in the gas stream, the oil being collected in the tank 408 has a relatively high flash point and might be considered high boiling pyrolysis oil, i.e. having a flash point of about 60° C. or higher and is typically between about 60° C. and about 90° C., and preferably about 60° C.

Gases exiting the condenser 401 via outlets 405 and 406 are then fed to respective secondary condensers 402 and 403. The condensers 402 and 403 are both horizontal condensers operating in a similar manner, and in the following only the operation of condenser 402 is described. The gases, which enter condenser 402 through the gas inlet 409a at the inlet end of the condenser 402, hold a temperature at about 105°C and are cooled below the dew point of water within the condenser 402. Thus, both water and oil may be condensed and collected in the tanks 412a, 412b of condenser 402 as a secondary oil fraction. However, the oil collected in the light fuel tanks 412 is of the low-boiling type, i.e. has a flash point of about 34° C. or below and is typically between about 34° C to about 24° C. and preferably about 30° C. Thus, this oil typically has a specific gravity of 0.90 to 0.95. Since this oil is significantly less dense than water, separation of the oil and water phases and the material collected in the tanks 412a, 412b may be readily accomplished.

The non-condensed gases exiting the gas outlet 410a of condenser 402 may be referred to as the secondary vapor fraction and contain mostly hydrocarbon fuel gases and some condensed oil mist entrained therein. The gases exiting the gas outlet 410a may be directed into a gas cleaner 413a. The gas cleaner 413a may be feed with a solution of sodium hydroxide, NaOH, 415a, in order to clean the incoming gases. The resulting cleaned gas 414a exiting the gas cleaner 413a may then be transported for storage or burned as fuel.

Thus, a system and a process has been illustrated and described which enables the recovery of usable products from the pyrolysis of solid fuel pieces, such as tire shreds. In particular, a system has been described, which avoids the drawbacks of previous systems. By controlling the temperature of the pyrolysis reactors and having several gas stream removal outlets from the reactor system, a fractioning of the oil and gas end products is obtained.

## Claims

1. A solid fuel pyrolysis system (100) comprising:
a first pyrolysis reactor (105) having an infeed end with a solid fuel inlet (201a) and a discharge end with a solid removal outlet (202a):
a second pyrolysis reactor (107) having an infeed end with a solid fuel inlet (201b) and a discharge end with a solid removal outlet (202b); and
first, second and third oil condensing systems (116, 118, 120); wherein
the first and second reactors (105, 107) are arranged with the solid fuel inlet (201b) of the second reactor being in communication with the solid removal outlet (202a) of the first reactor for transfer of processed solid fuel from the first reactor (105) to the second reactor (107);
the first reactor (105) has a first gas removal outlet (203a) arranged closer to the discharge end than to the infeed end;
the second reactor (107) has a gas removal outlet, being a second gas removal outlet (203b), arranged closer to the infeed end than to the discharge end, and a gas removal outlet, being a third gas removal outlet (203c), arranged closer to the discharge end than to the infeed end;
the first oil condensing system (116) has a gas inlet in communication with the first gas removal outlet (203a) of the first reactor (105);
the second oil condensing system (118) has a gas inlet in communication with the second gas removal outlet (203b) of the second reactor (107); and
the third oil condensing system (120) has a gas inlet in communication with the third gas removal outlet (203c) of the second reactor (107).

2. A solid fuel pyrolysis system (100) according to claim 1, wherein the first and second reactors (105, 107) are horizontally arranged, and wherein the discharge end of the first reactor (105) is arranged above the infeed end of the second reactor (107).

3. A solid fuel pyrolysis system (100) according to claim 1 or 2, wherein the first and second reactors (105, 107) are continuous type pyrolysis reactors, and wherein each of the first and second reactors comprises an auger (204a, 204b) configured for transferring solid fuel pieces from the solid fuel inlet to the solid removal outlet.

4. A solid fuel pyrolysis system (100) according to any one of the claims 1 to 3, wherein each of the pyrolysis reactors (105, 107) has an inner reactor shell (205a, 205b) for processing solid fuel, and for each reactor the solid fuel inlet (201a, 201b) at the infeed end reaches into the inner reactor shell (205a, 205b) and the solid removal outlet (202a, 202b) at the discharge end reaches into the inner reactor shell;
wherein each of the pyrolysis reactors (105, 107) has an outer shell or jacket (206a, 206b) at least partly surrounding the inner reactor shell (205a, 205b), said outer shell or jacket holding in- and outlets (207a, 207b) (208a, 208b) for transfer of a heating medium to and from the outer shell or jacket; and
wherein the heating medium is molten salt, and wherein the system further comprises a boiler system for heating the molten salt and for circulating the molten salt to and from the pyrolysis reactors.

5. A solid fuel pyrolysis system (100) according to any one of the claims 1 to 4, further comprising a solid fuel feeding system in communication with the solid fuel inlet (201a) of the first reactor (105);
wherein the solid fuel feeding system is configured for pre-heating or drying solid fuel pieces before said pieces enter the first pyrolysis reactor; and
wherein the solid fuel feeding system comprises a screw or auger configured for transferring said solid fuel pieces into the first pyrolysis reactor, and further comprises a pre-heating zone including or covering a part, such as about half the length, of the screw or auger.

6. A solid fuel pyrolysis system (100) according to any one of the claims 1 to 5, wherein each or at least part of the oil condensing systems (116, 118, 120) comprises a primary oil condenser and a secondary oil condenser;
wherein the primary oil condenser is configured for operating at a first oil condensing temperature being higher than one or more second oil condensing temperatures of the secondary oil condenser; and
wherein the primary oil condenser holds the gas inlet of said oil condensing system and one or more gas outlets feeding one or more gas inlets of the secondary oil condenser.

7. A solid fuel pyrolysis system (100) according to any one of the claims 1 to 6, wherein each or at least part of the oil condensing systems (116, 118, 120) comprises a vertical condenser (401) and a first and a second horizontal condenser (402, 403); and
wherein the vertical condenser (401) holds the gas inlet of the condensing system, a first gas outlet (405) feeding a gas inlet (409a) of the first horizontal condenser (402), a second gas outlet (406) feeding a gas inlet (409b) of the second horizontal condenser (403), and an oil outlet (407) for condensed oil.

8. A solid fuel pyrolysis system (100) according to claims 6 and 7, wherein the primary oil condenser comprises said vertical condenser (401), and the secondary oil condenser comprises said first and second horizontal condensers (402, 403).

9. A process for pyrolyzing solid fuel, comprising:
feeding solid fuel pieces into a first pyrolysis reactor (105);
pyrolyzing the solid fuel pieces in the first pyrolysis reactor (105) to produce a first gas stream, which comprises hydrocarbon, and first solid pieces comprising carbon;
transferring the first solid pieces comprising carbon from the first pyrolysis reactor (105) into a second pyrolysis reactor (107);
pyrolyzing the first solid pieces in the second pyrolysis reactor to produce at least a second gas stream, which comprises hydrocarbon, and second solid pieces comprising carbon; and
removing the second solid pieces comprising carbon from the second pyrolysis reactor;
wherein both a second and a third gas stream comprising hydrocarbon are produced during said pyrolyzing in the second pyrolysis reactor (107);
wherein each of the produced gas streams are directed into a corresponding, separate oil condensing system (116, 118, 120); and
wherein the first reactor (105) holds a first gas removal outlet (203a), and the second reactor holds two separate gas removal outlets, a second and a third gas removal outlet (203b, 203c), and wherein the first gas stream is directed into a first oil condensing system (116) via the first gas removal outlet (203a), the second gas stream is directed into a second oil condensing system (118) via the second gas removal outlet (203b), and the third gas stream is directed into a third oil condensing system (120) via the second gas removal outlet (203c).

## Patentansprüche

1. Pyrolysesystem (100) für feste Brennstoffe, welches umfasst:
einen ersten Pyrolysereaktor (105), der ein Zuführungsende mit einem Einlass für feste Brennstoffe (201a) und ein Austragsende mit einem Auslass zum Entfernen von Feststoffen (202a) aufweist;
einen zweiten Pyrolysereaktor (107), der ein Zuführungsende mit einem Einlass für feste Brennstoffe (201b) und ein Austragsende mit einem Auslass zum Entfernen von Feststoffen (202b) aufweist; und
ein erstes, ein zweites und ein drittes Ölkondensationssystem (116, 118, 120); wobei der erste und der zweite Reaktor (105, 107) so angeordnet sind, dass der Einlass für feste Brennstoffe (201b) des zweiten Reaktors mit dem Auslass zum Entfernen von Feststoffen (202a) des ersten Reaktors zum Transport von verarbeitetem festem Brennstoff vom ersten Reaktor (105) zum zweiten Reaktor (107) in Verbindung steht;
der erste Reaktor (105) einen ersten Gasentnahmeauslass (203a) aufweist, der näher am Austragsende als am Zuführungsende angeordnet ist;
der zweite Reaktor (107) einen Gasentnahmeauslass, der ein zweiter Gasentnahmeauslass (203b) ist, der näher am Zuführungsende als am Austragsende angeordnet ist, und
einen Gasentnahmeauslass, der ein dritter Gasentnahmeauslass (203c) ist, der näher am Austragsende als am Zuführungsende angeordnet ist aufweist;
das erste Ölkondensationssystem (116) einen Gaseinlass aufweist, der mit dem ersten Gasentnahmeauslass (203a) des ersten Reaktors (105) in Verbindung steht;
das zweite Ölkondensationssystem (118) einen Gaseinlass aufweist, der mit dem zweiten Gasentnahmeauslass (203b) des zweiten Reaktors (107) in Verbindung steht; und das dritte Ölkondensationssystem (120) einen Gaseinlass aufweist, der mit dem dritten Gasentnahmeauslass (203c) des zweiten Reaktors (107) in Verbindung steht.

2. Pyrolysesystem (100) für feste Brennstoffe nach Anspruch 1, wobei der erste und der zweite Reaktor (105, 107) horizontal angeordnet sind und wobei das Austragsende des ersten Reaktors (105) oberhalb des Zuführungsendes des zweiten Reaktors (107) angeordnet ist.

3. Pyrolysesystem (100) für feste Brennstoffe nach Anspruch 1 oder 2, wobei der erste und der zweite Reaktor (105, 107) kontinuierliche Pyrolysereaktoren sind und wobei der erste und der zweite Reaktor jeweils eine Förderschnecke (204a, 204b) umfassen, die dafür ausgelegt ist, feste Brennstoffstücke vom Einlass für feste Brennstoffe zum Auslass zum Entfernen von Feststoffen zu fördern.

4. Pyrolysesystem (100) für feste Brennstoffe nach einem der Ansprüche 1 bis 3, wobei jeder der Pyrolysereaktoren (105, 107) einen inneren Reaktormantel (205a, 205b) zum Verarbeiten von festem Brennstoff aufweist und für jeden Reaktor der Einlass für feste Brennstoffe (201a, 201b) am Zuführungsende in den inneren Reaktormantel (205a, 205b) hineinreicht und der Auslass zum Entfernen von Feststoffen (202a, 202b) am Austragsende in den inneren Reaktormantel hineinreicht;
wobei jeder der Pyrolysereaktoren (105, 107) einen äußeren Mantel oder eine Umhüllung (206a, 206b) aufweist, der bzw. die den inneren Reaktormantel (205a, 205b) wenigstens teilweise umgibt, wobei der äußere Mantel oder die Umhüllung Ein- und Auslässe (207a, 207b), (208a, 208b) zum Transport eines Heizmediums zu und von dem äußeren Mantel oder der Umhüllung aufweist; und
wobei das Heizmedium Salzschmelze ist und wobei das System ferner ein Kesselsystem zum Erwärmen der Salzschmelze und zum Umwälzen der Salzschmelze zu und von den Pyrolysereaktoren umfasst.

5. Pyrolysesystem (100) für feste Brennstoffe nach einem der Ansprüche 1 bis 4, welches ferner ein Einspeisesystem für feste Brennstoffe umfasst, das mit dem Einlass für feste Brennstoffe (201a) des ersten Reaktors (105) in Verbindung steht;
wobei das Einspeisesystem für feste Brennstoffe dafür ausgelegt ist, feste Brennstoffstücke vorzuwärmen oder zu trocknen, bevor diese Stücke in den ersten Pyrolysereaktor gelangen; und
wobei das Einspeisesystem für feste Brennstoffe einen Schraubenförderer oder eine Förderschnecke umfasst, der bzw. die dafür ausgelegt ist, feste Brennstoffstücke in den ersten Pyrolysereaktor zu fördern, und ferner einen Vorwärmbereich umfasst, der einen Teil, wie etwa die halbe Länge, des Schraubenförderers oder der Förderschnecke enthält oder abdeckt.

6. Pyrolysesystem (100) für feste Brennstoffe nach einem der Ansprüche 1 bis 5, wobei jedes der Ölkondensationssysteme (116, 118, 120) oder wenigstens ein Teil von ihnen einen primären Ölkondensator und einen sekundären Ölkondensator umfasst;
wobei der primäre Ölkondensator dafür ausgelegt ist, bei einer ersten Ölkondensationstemperatur zu arbeiten, die höher als eine oder mehrere Ölkondensationstemperaturen des sekundären Ölkondensators ist; und
wobei der primäre Ölkondensator den Gaseinlass des Ölkondensationssystems und einen oder mehrere Gasauslässe, die einen oder mehrere Gaseinlässe des sekundären Ölkondensators speisen, aufweist.

7. Pyrolysesystem (100) für feste Brennstoffe nach einem der Ansprüche 1 bis 6, wobei jedes der Ölkondensationssysteme (116, 118, 120) oder wenigstens ein Teil von ihnen einen vertikalen Kondensator (401) und einen ersten und einen zweiten horizontalen Kondensator (402, 403) umfasst; und
wobei der vertikale Kondensator (401) den Gaseinlass des Kondensationssystems, einen ersten Gasauslass (405), der einen Gaseinlass (409a) des ersten horizontalen Kondensators (402) speist, einen zweiten Gasauslass (406), der einen Gaseinlass (409b) des zweiten horizontalen Kondensators (403) speist, und einen Ölauslass (407) für kondensiertes Öl aufweist.

8. Pyrolysesystem (100) für feste Brennstoffe nach den Ansprüchen 6 und 7, wobei der primäre Ölkondensator den vertikalen Kondensator (401) umfasst und der sekundäre Ölkondensator den ersten und den zweiten horizontalen Kondensator (402, 403) umfasst.

9. Verfahren zum Pyrolisieren von festem Brennstoff, welches umfasst:
Einspeisen von festen Brennstoffstücken in einen ersten Pyrolysereaktor (105);
Pyrolysieren der festen Brennstoffstücke in dem ersten Pyrolysereaktor (105), um einen ersten Gasstrom, welcher Kohlenwasserstoff enthält, und erste feste Stücke, die Kohlenstoff enthalten, zu erzeugen;
Transportieren der ersten festen Stücke, die Kohlenstoff enthalten, aus dem ersten Pyrolysereaktor (105) in einen zweiten Pyrolysereaktor (107);
Pyrolysieren der ersten festen Stücke in dem zweiten Pyrolysereaktor, um wenigstens einen zweiten Gasstrom, welcher Kohlenwasserstoff enthält, und zweite feste Stücke, die Kohlenstoff enthalten, zu erzeugen; und
Entfernen der zweiten festen Stücke, die Kohlenstoff enthalten, aus dem zweiten Pyrolysereaktor;
wobei sowohl ein zweiter als auch ein dritter Gasstrom, die Kohlenwasserstoff enthalten, während des Pyrolysierens in dem zweiten Pyrolysereaktor (107) erzeugt werden;
wobei jeder der erzeugten Gasströme in ein entsprechendes, separates Ölkondensationssystem (116, 118, 120) eingeleitet wird; und
wobei der erste Reaktor (105) einen ersten Gasentnahmeauslass (203a) aufweist und der zweite Reaktor zwei separate Gasentnahmeauslässe, einen zweiten und einen dritten Gasentnahmeauslass (203b, 203c), aufweist, und wobei der erste Gasstrom über den ersten Gasentnahmeauslass (203a) in ein erstes Ölkondensationssystem (116) eingeleitet wird, der zweite Gasstrom über den zweiten Gasentnahmeauslass (203b) in ein zweites Ölkondensationssystem (118) eingeleitet wird und der dritte Gasstrom über den zweiten Gasentnahmeauslass (203c) in ein drittes Ölkondensationssystem (120) eingeleitet wird.

## Revendications

1. Système de pyrolyse à combustible solide (100), comprenant :
un premier réacteur de pyrolyse (105) comportant une extrémité d'alimentation avec une entrée de combustible solide (201a) et une extrémité de décharge avec une sortie d'évacuation de solides (202a) ;
un second réacteur de pyrolyse (107) comportant une extrémité d'alimentation avec une entrée de combustible solide (201b) et une extrémité de décharge avec une sortie d'évacuation de solides (202b) ; et
un premier, un deuxième et un troisième système de condensation d'huile (116, 118, 120) ; dans lequel le premier et le second réacteur (105, 107) sont agencés avec l'entrée de combustible solide (201b) du second réacteur et entre communication avec la sortie de combustible solide (202a) du premier réacteur pour un transfert de combustible solide traité provenant du premier réacteur (105) au second réacteur (107) ;
le premier réacteur (105) comporte une première sortie d'évacuation de gaz (203a) agencée plus près de l'extrémité de décharge que de l'extrémité d'alimentation ;
le second réacteur (107) comporte une sortie d'évacuation de gaz, étant une seconde sortie d'évacuation de gaz (203b), agencée plus près de l'extrémité d'alimentation de l'extrémité de décharge,
et une sortie d'évacuation de gaz, étant une troisième sortie d'évacuation de gaz (203c), agencée plus près de l'extrémité de décharge que de l'extrémité d'alimentation ;
le premier système de condensation d'huile (116) comporte une entrée de gaz en communication avec la première sortie d'évacuation de gaz (203a) du premier réacteur (105) ;
le deuxième système de condensation d'huile (118) comporte une entrée de gaz en communication avec la deuxième sortie d'évacuation de gaz (203b) du second réacteur (107) ; et
le troisième système de condensation d'huile (120) comporte une entrée de gaz en communication avec la troisième sortie d'évacuation de gaz (203c) du second réacteur (107).

2. Système de pyrolyse à combustible solide (100) selon la revendication 1, dans lequel le premier et le second réacteur (105, 107) sont agencés de manière horizontale, et dans lequel l'extrémité de décharge du premier réacteur (105) est agencée au-dessus de l'extrémité d'alimentation du second réacteur (107).

3. Système de pyrolyse à combustible solide (100) selon la revendication 1 ou la revendication 2, dans lequel le premier et le second réacteur (105, 107) sont des réacteurs de pyrolyse de type continu, et dans lequel chacun parmi le premier et le second réacteur comprend une tarière (204a, 204b) configurée pour permettre le transfert de morceaux de combustible solide de l'entrée de combustible solide vers la sortie d'évacuation de solides.

4. Système de pyrolyse à combustible solide (100) selon l'une quelconque des revendications 1 à 3, dans lequel chacun des réacteurs de pyrolyse (105, 107) comporte une enveloppe de réacteur interne (205a, 205b) permettant de traiter un combustible solide, et pour chaque réacteur l'entrée de combustible solide (201a, 201b) au niveau de l'entrée d'alimentation atteint l'enveloppe de réacteur interne (205a, 205b) et la sortie d'évacuation de solides (202a, 202b) au niveau de l'extrémité de décharge atteint l'enveloppe de réacteur interne ;
dans lequel chacun des réacteurs de pyrolyse (105, 107) comporte une coque ou une chemise externe (206a, 206b) entourant au moins partiellement l'enveloppe de réacteur interne (205a, 205b), ladite coque ou chemise externe contenant des entrées et des sorties (207a, 207b) (208a, 208b) pour le transfert d'un milieu caloporteur vers la coque ou la chemise externe ou en provenance de celles-ci ; et
dans lequel le milieu caloporteur est un sel fondu, et dans lequel le système comprend en outre un système de chaudière permettant de chauffer le sel fondu et permettant de faire circuler le sel fondu vers les réacteurs de pyrolyse et en provenance de ceux-ci.

5. Système de pyrolyse à combustible solide (100) selon l'une quelconque des revendications 1 à 4, comprenant en outre un système d'alimentation de combustible solide en communication avec l'entrée de solides (201a) du premier réacteur (105) ;
dans lequel le système d'alimentation de combustible solide est configuré pour le préchauffage ou le séchage de morceaux de combustible solide avant que lesdits morceaux n'entrent dans le premier réacteur de pyrolyse ; et
dans lequel le système d'alimentation de solides comprend une vis ou une tarière configurée pour le transfert desdits morceaux de combustible solide dans le premier réacteur de pyrolyse, et comprend en outre une zone de préchauffage comprenant ou recouvrant une partie, telle qu'environ la moitié de la longueur, de la vis ou de la tarière.

6. Système de pyrolyse à combustible solide (100) selon l'une quelconque des revendications 1 à 5, dans lequel chacun ou au moins une partie des systèmes de condensation d'huile (116, 118, 120) comprend un condensateur d'huile primaire et un condensateur d'huile secondaire ;
dans lequel le condensateur d'huile primaire contient l'entrée de gaz dudit système de condensation d'huile et une ou plusieurs sorties de gaz alimentant une ou plusieurs entrées de gaz du condensateur d'huile secondaire.

7. Système de pyrolyse à combustible solide (100) selon l'une quelconque des revendications 1 à 6, dans lequel chacun ou au moins une partie des systèmes de condensation d'huile (116, 118, 120) comprend un condensateur vertical (401) et un premier et un second condensateur horizontal (402, 403) ; et
dans lequel le condensateur vertical (401) contient l'entrée de gaz du système de condensation, une première sortie de gaz (405) alimentant une entrée de gaz (409a) du premier condensateur horizontal (402), une seconde sortie de gaz (406) alimentant une entrée de gaz (409b) du second condensateur horizontal (403), et une sortie d'huile (407) pour une huile condensée.

8. Système de pyrolyse à combustible solide (100) selon la revendication 6 et la revendication 7, dans lequel le condensateur d'huile primaire comprend ledit condensateur vertical (401), et le condensateur d'huile secondaire comprend lesdits premiers et seconds condensateurs horizontaux (402, 403).

9. Procédé de pyrolyse de combustible solide consistant à :
alimenter des morceaux de combustible solide dans un premier réacteur de pyrolyse (105) ;
pyrolyser les morceaux de combustible solide dans le premier réacteur de pyrolyse (105) afin de produire un premier flux de gaz, qui comprend des hydrocarbures, et les premiers morceaux solides comprenant du carbone ;
les premiers morceaux solides comprenant le carbone du premier réacteur de pyrolyse (105) dans un second réacteur de pyrolyse (107) ;
pyrolyser les premiers morceaux solides dans le second réacteur de pyrolyse afin de produire au moins un deuxième flux de gaz, qui comprend des hydrocarbures, et les seconds morceaux solides comprenant du carbone ; et
éliminer les seconds morceaux solides comprenant le carbone du second réacteur de pyrolyse ;
dans lequel à la fois un deuxième et un troisième flux de gaz comprenant des hydrocarbures sont produits durant ladite pyrolyse dans le second réacteur de pyrolyse (107) ;
dans lequel chacun des flux de gaz produit sont dirigés dans un système de condensation d'huile séparé correspondant (116, 118, 120) ; et
dans lequel le premier réacteur (105) contient une première sortie d'évacuation de gaz (203a), et le second réacteur contient deux sorties d'évacuation de gaz séparées, une deuxième et une troisième sortie d'évacuation de gaz (203b, 203c), et dans lequel le premier flux de gaz est dirigé dans un premier système de condensation d'huile (116) par l'intermédiaire de la première sortie d'évacuation de gaz (203a), le deuxième flux de gaz est dirigé dans un second système de condensation d'huile (118) par l'intermédiaire de la deuxième sortie d'évacuation de gaz (203b), et le troisième flux de gaz est dirigé dans un troisième système de condensation d'huile (120) par l'intermédiaire de la deuxième sortie d'évacuation de gaz (203c).
